# EUROPEAN PATENT SPECIFICATION

(11) **EP 1 623 119 B1**
(45) Date of publication and mention of the grant of the patent: **19.11.2008**
(21) Application number: 04729910.2
(22) Date of filing: 28.04.2004
(51) Int. Cl.: F04B 9/04, F04B 1/04, F16H 53/00, F16H 53/06

(54) **IMPROVEMENTS IN CAMS AND CAM FOLLOWERS**
VERBESSERUNGEN IN NOCKEN UND NOCKENFOLGERN
AMELIORATIONS APPORTEES A DES CAMES ET DES GALETS SUIVEURS

(30) Priority: 28.04.2003 GB 0309699
(43) Date of publication of application: 08.02.2006
(73) Proprietor: Delphi Technologies, Inc., Troy, MI 48007 (US)
(72) Inventor: BOND, Robert, S., Challock, Kent TN25 4DQ (GB)
(74) Representative: Gregory, John David Charles
(86) International application number: PCT/GB2004/001826
(87) International publication number: WO 2004/097219

(56) References cited:
- DE-A- 2 840 160
- GB-A- 189 436
- GB-A- 837 087
- GB-A- 2 126 284
- US-A- 2 697 007
- US-A- 3 050 001
- US-A- 3 344 685
- US-A- 4 152 953
- US-A1- 2002 189 438

## Description

This invention relates to cams and cam followers. In particular, this invention relates to rotatable cams and cam followers used in internal combustion engines.

Rotating cams are used to impart a reciprocal motion to a body held in contact with the cam surface. One of such rotating cams is shown e.g. in GB-2126284-A. The body held in contact is commonly referred to as a cam follower, or simply as a follower. In combustion engines, cams formed on a camshaft are commonly used to control the opening and closing of valves, for example, the inlet and outlet valves of a fuel pressurisation pump. In this context, the follower is usually of a roller design and rolls along the surface of the cam as the camshaft rotates.

Due to small inaccuracies in manufacturing, it is impossible to ensure that the follower axis is always parallel to the cam axis: this results in a tendency for the follower to wander, or track, across the cam surface during cam operation. This behaviour is undesired as it brings attendant disadvantages in the actuation of the follower. For example, the cam may impart an inaccurate stroke to the follower, wear on the follower and cam may be uneven and unexpected and the forces acting on the cam and follower in use may be different to those calculated during design, thus leading to unexpected failure.

To reduce the effects of these undesired characteristics, one could ensure that the manufacturing process is more accurate. However, this is prohibitively expensive for a component that is commercially mass-produced. Furthermore, the time required to ensure a precision finish within the reduced tolerance levels excludes this solution from most mass-market applications of cams and followers.

Mechanical means may be employed to guide the follower whereby the follower attitude and position is maintained relative to the cam surface. This also is costly, however, and adds weight to the overall combination of cam and follower. The mechanical guiding means known to date constrain the follower within a mount designed to allow limited movement through rollers and sliders so that the follower is allowed limited tracking along the cam surface throughout the entire revolution of the cam. A disadvantage with this arrangement, however, is that the guiding means itself presents a significant increase in wear and frictional losses. For example, it is known that with camshaft applications in fuel pumps, resisting tracking during high pumping loads requires very high side loads to overcome the friction between the cam and the roller.

Furthermore, whilst increased component life and increased resistance to wear are attainable by selecting tougher, stronger materials and surface finishes for the cam and follower, this is not an acceptable solution as it does not escape the unwanted corollaries of increased cost and mass. With modern camshafts required to rotate at speeds sup to several thousand times a minute (an example being the camshafts used in fuel pumps for common-rail compression-ignition engines), any increase in rotational mass will result in considerable increases in energy expenditure and fuel consumption over the life of the component in question in order to overcome the higher inertia forces.

When cams and cam followers are used in automobile engine installations a further important consideration is that of engine height. Engine height dictates the height of the engine compartment and, for many types of automobile this is undesirable for both aerodynamic and aesthetic reasons. Current mechanical guiding means require a separate lubrication sub-system and associated equipment to separate the fuel and lubrication oil circuits. Thus, the height of the engine installation overall cannot be reduced in many circumstances due to this additional ancillary equipment, and this limits design options, compromises performance and reduces desirability of the automobile.

What is needed, therefore, is a solution to the above problems of maintaining accurate tracking of the cam follower with a minimal increase in cost, time to manufacture, size and weight. Put another way, a solution is sought to reduce the cost of components whilst still maintaining component life and operational accuracy and efficiency.

What is provided in a first aspect of the invention is a cam for use in a fuel pump, the fuel pump having a pump filling phase and a pump delivery phase, wherein the cam comprises a cam surface provided with a portion corresponding to the pump filling phase and a portion corresponding to the pump delivery phase, the cam surface further comprising a channel suitable for guiding a cam follower in contact with the cam surface characterised in that the width of the channel is adapted to permit guidance of the cam follower only for the portion of the cam surface corresponding to the pump filling phase.

By only providing guidance to the cam follower under favourable conditions - i.e. during periods of low frictional forces encountered during a 'fiiiing phase' part of a pumping cycle - the mechanical guiding means of the invention may be of reduced complexity and weight over known apparatus. What is meant by the term 'filling phase' is the part of the pumping cycle during which a fuel pump takes in fuel under relatively low pressure so that after the filling phase the fuel may be pumped out at relatively high pressure during a 'delivery phase'. By 'portion of a cam surface corresponding to the filling phase', it is meant that part of the cam surface which co-operates with a drive member of the fuel pump, via the cam follower, during the filling phase.

Preferably, the channel is substantially narrower than the width of the cam.

It is also envisaged that the cam is suitable for use in a common-rail fuel pump. It is advantageous in the cam of the invention for the width of the channel to vary around the circumference of the cam.

In a second aspect of the invention, there is provided a common-rail fuel pump suitable for use with an internal combustion engine incorporating a cam according to the first aspect of the invention.

It is preferable that the common-rail fuel pump described above is a radial fuel pump.

It is further preferable that the aforementioned common-rail fuel pump does not require lubricating oil.

Present cam and cam follower arrangements require lubricating oil and means have to be provided to collect and reuse this oil when the cam is in use. Furthermore, in a fuel pump application, mixing of fuel and lubricating oil is highly undesirable and further means have to be provided to separate these two fluid systems. By contrast the present invention does not need a wet lubrication system and any fuel pump employing the invention avoids the added complexity and cost that would be attendant with using lubricating oil.

In a third aspect of the invention, there is also provided a method of guiding a cam follower along the surface of a cam for use in a fuel pump, the cam surface comprising a portion corresponding to a pump filling phase and a portion corresponding to a pump delivery phase, characterised in that guidance is provided by the cam to the cam follower only during the pump filling phase.

In the method described above, it is preferable that the channel presented to the follower varies in width around the circumference of the cam.

The present invention is now described with reference to the accompanying figures wherein:
Figure 1 is a schematic sectional view of known mechanical guiding means for a cam follower;
Figure 2 is a side elevation of a cam on a camshaft according to the invention;
Figure 3 is a perspective view of the cam and camshaft shown in Figure 2;
Figure 4 shows the cam and follower arrangement shown in Figures 2 and 3 as employed in a fuel pump;
Figure 5 is a representative cam mapping for the cam shown in Figures 2 to 4;
Figure 6 is an overview of the relational positioning between fuel, lubrication system and guiding means when the apparatus shown in Figure 1 is employed in a fuel pump; and
Figure 7 is a detailed sectional view of the fuel scavenging system employed in the apparatus shown in Figure 6.

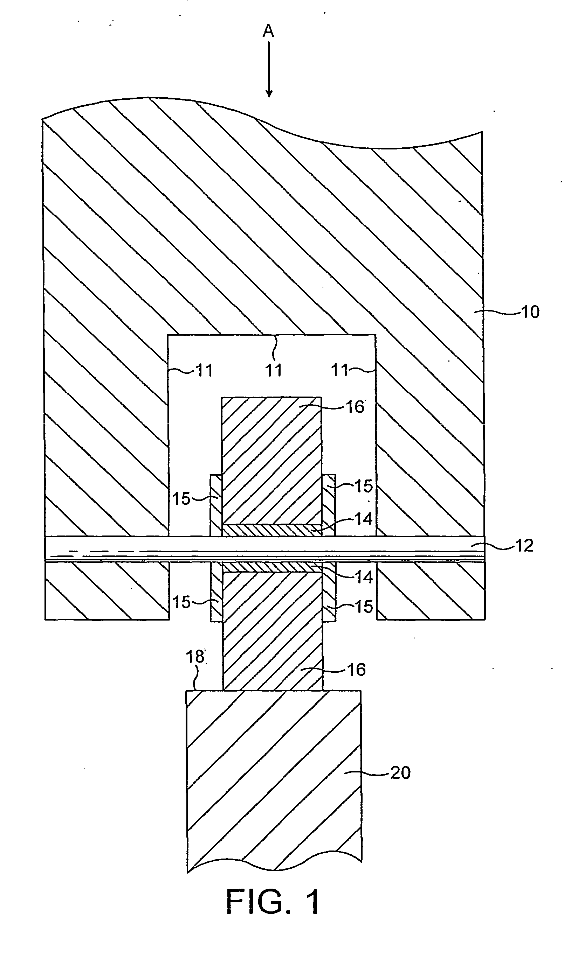

There is provided in Figure 1 a known apparatus for guiding a cam follower over the surface of a cam. A drive member in the form of a tappet 10 has mounted near one end a guide bar 12. On the guide bar 12 is mounted a guide roller 14 which rotates about the guide bar 12. Mounted on the guide roller 14 is a cam follower 16, which is in contact with a cam surface 18 of a cam 20. Thin pads 15 are provided either side of the guide roller 14 and cam follower 16. Not shown in this figure is a camshaft upon which the cam is formed, and also not shown in this figure is biasing means which acts in the direction of the arrow A on the tappet 10 to ensure contact is maintained between the cam follower 16 and the cam surface 18. The clearance between the surfaces 11 of the tappet 10 and the thin pads 15 and cam follower 16 is in the order of approximately two to three millimetres.

In use, the guide roller 14 allows the cam follower 16 to travel through a limited range of lateral movement along the length of the guide bar 12 as the cam 20 rotates and imparts a vertical reciprocal movement to the cam follower 16. The thin pads 15 ensure that the guide roller 14 and the cam follower 16 are in alignment throughout any lateral movement along the guide bar 12.

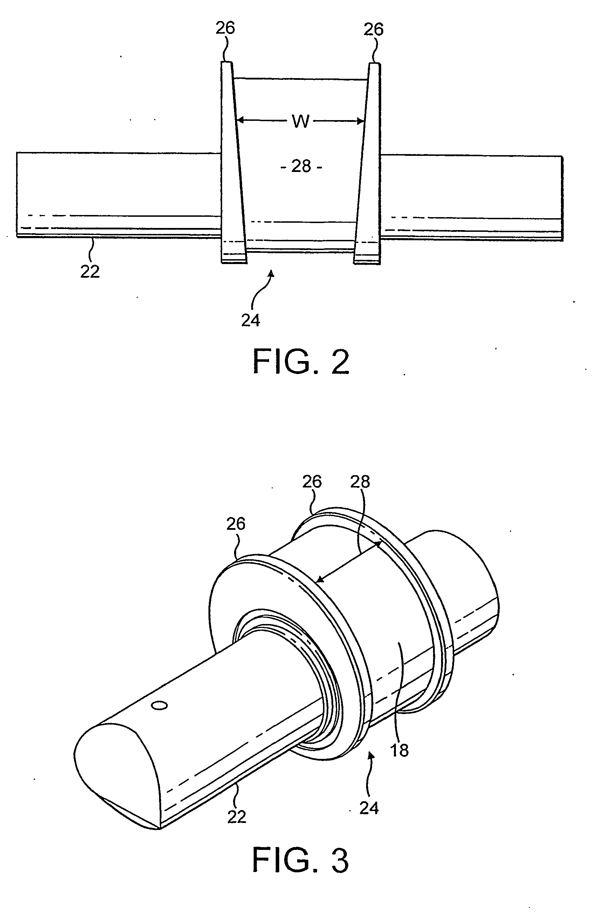

Referring to Figures 2 and 3, there is shown an apparatus for guiding a cam follower according to the present invention. Shown is a camshaft 22 upon which a cam shown generally at 24 is located. The cam 24 comprises a cam surface 18 and two outer flanges 26 which together with the cam surface 18 define a channel 28. The width of the channel 28 at any position of the cam surface 18 is represented by width W. The width of each flange 26, measured in the longitudinal direction of the camshaft 22, varies around the circumference of the cam 24. For clarity purposes the cam follower is not shown, although as will be apparent later, the configuration of the follower is not important to the invention as all commonly-used followers may be employed with this invention.

In use as the camshaft 22 rotates, the cam 24 rotates too and the width of the channel 28 presented to a follower (not shown) in contact with the cam surface - 18 in the channel 28 widens and narrows accordingly. The widening and narrowing of the channel 28 has a guiding effect upon where contact is made between the follower (not shown) and the cam surface 18. It is clear to see that any tracking of the follower along the width W is constrained within the width W as the flanges 26 present a barrier to continued movement beyond the width W.

What is apparent from the foregoing is that complex guiding apparatus requiring specialised followers comprising rollers and bars are obviated. Any known follower, such as a roller-follower, may be used with the invention and be guided along the full rotation of the cam. Furthermore, should guiding only be needed along a partial rotation of the cam, the width W of the channel 28 may be adjusted so that guidance is only provided along the portion of the rotation that is required. In the previous example given of camshaft applications in fuel pumps, a single camshaft may be used to drive valves that function as both fill and delivery valves, in other words as inlet and outlet valves. These dual-function valves may act as fill valves during one part of the cam revolution and act as pump or delivery valves during another part of the cam revolution in the case of a cam with a multi-lobed cam profile, or they may act as fill and delivery valves in turn during successive revolutions of the cam. In either case, when a valve is acting as a fill valve the friction forces generated between the cam and the follower during a 'filling operation' or 'filling phase' will be relatively small compared to the friction forces present when the valve acts as a delivery valve during a delivery operation or delivery phase. Accordingly, the width W may be adjusted so that the follower is allowed to track relatively unhindered during the delivery phase but is re-centred during the filling phase. It is envisaged that such an arrangement requires the width W to be smallest at Bottom Dead Centre (BDC), increasing to a maximum gap at Top Dead Centre (TDC). The increase in gap during the cam lift is arranged to accommodate maximum designed misalignment between the follower axis and the cam axis.

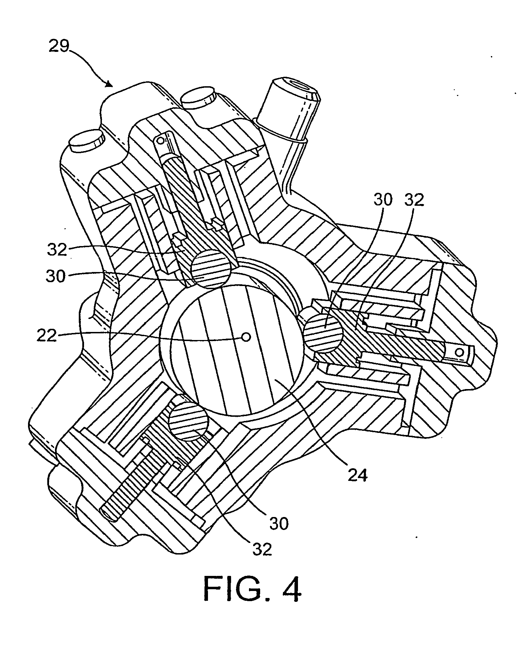

By way of example of an application of the cam of the present invention, Figure 4 shows a positive displacement fuel pump 29, of radial pump-type, employing a camshaft 22 and a cam 24 driving three roller followers 30, which in turn are each connected to a respective tappet 32.

In the context of the pumping cycle applicable to the radial pump-type shown in Figure 4, the point in the cycle of each pumping chamber which corresponds to maximum swept volume is defined as Bottom Dead Centre (BDC). At this point in its pumping cycle each pumping chamber is in the filling phase, and the frictional forces between the cam 24 and each pumping chamber's respective cam follower are at its lowest. During the filling phase, the valve is operable to allow fuel to flow into the pump chamber for pressurisation later in the pumping cycle. As the pumping cycle progresses, the point in the cycle of each pumping chamber which corresponds to minimum swept volume is defined as Top Dead Centre (TDC). At TDC each pumping chamber is in the delivery phase and the frictional forces between the cam 24 and each pumping chamber's respective cam is at its highest. During the delivery phase, the valve is operable to allow pressurised fuel to be delivered from the pumping chamber to downstream parts of the fuel system.

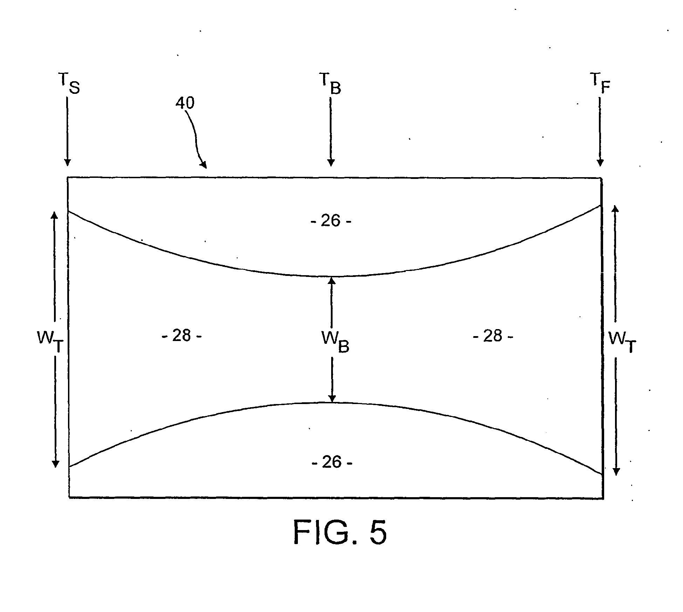

Figure 5 shows a representative cam mapping shown generally at 40 of the cam as shown and described above in Figures 2 to 4. The mapping 40 shows the rotative dimensions of the channel 28 and the flanges 26 of the cam 24 around one complete revolution of the cam 24. The mapping 40 starts at the TDC position of the cam 24 and this position is indicated on the mapping 40 by the arrow T_{S}. The end of one complete revolution of the cam 24 therefore also ends at the TDC position and this is shown on the mapping 40 by the arrow T_{F}. Accordingly, the arrow T_{B} shows the BDC position of the cam 24 along the mapping 40. The width of the channel 28 at TDC is represented by the dimension W_{T}, and the width of the channel 28 at BDC is represented by the dimension W_{B}. At the start of each revolution of the cam 24, the follower (not shown in Figure 5) is optimally positioned along the width W, which in this case is along the centreline of the channel 28.

The start of the mapping 40 at the arrow T_{S} corresponds to the TDC position of the cam 24, which is also when the friction forces generated between the follower (not shown) and the cam 24 are at the highest during a pumping operation. As explained previously, when the follower experiences high friction forces it is desirable to reduce any side loading on the follower. Hence, at T_{S} the width W_{T} is as wide as possible to avoid contact with the follower, as contact with the follower is likely to induce side loading forces on the follower. Accordingly, in the mapping 40 no guidance is provided to the follower at position T_{S}.

At the position on the mapping 40 indicated at T_{B}, the cam 24 and follower generate the least frictional force between each other, which also corresponds to a filling operation. As frictional forces are at their lowest at this position, the flanges 26 start to constrict the channel 28 to the narrowest width W_{B}, and between W_{T} and W_{B} the follower makes contact with one or both of the flanges 26 and starts to be guided by this contact. At T_{B} the follower experiences the maximum guidance from one of or both of the flanges 26, and the follower is accordingly guided back to its optimal position along the centreline of the channel 28 ready to start another revolution along with the cam 24.

It is plain to see from Figure 5 that this embodiment of the invention only provides guidance to the follower under favourable conditions - i.e. during periods of low frictional forces - and does not need to provide guidance over the complete revolution of the cam 24. The appreciation of these two factors produces reduced complexity and weight over known methods and apparatus.

In Figures 2 to 4 the cam 24 contains a single lobe, and hence the mapping shown in Figure 5 is of a single-lobed cam, but this invention is equally applicable to multi-lobed cam profiles. In the case of a multi-lobed cam, the variation of the width W will approach W_{B} and W_{T} at each position on the mapping of the multi-lobed cam where filling and pumping occur respectively.

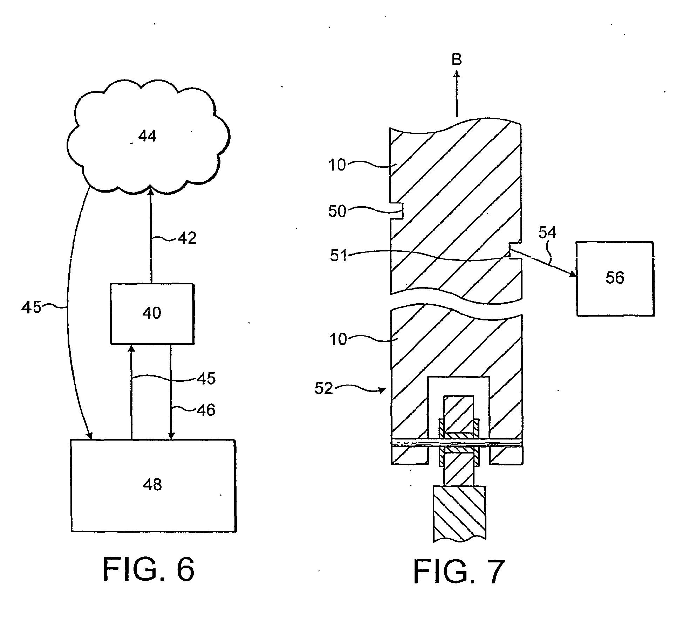

Figure 6 is an overview of the relational positioning between fuel, lubrication system and guiding means when the apparatus shown in Figure 1 is employed in a fuel pump. The apparatus as shown in Figure 1 is generally represented at 40, and pressurises fuel 44 via the movement, indicated by arrow 42, of the tappet 10 (not shown) relative to a fuel-pumping chamber (also not shown). To keep the apparatus of Figure 1 working smoothly and to keep frictional losses and mechanical wear to a minimum, lubricating oil from a supply 48 is applied to the components shown in Figure 1. This lubricating oil is constantly reused as shown by the lubricating oil conduits 45 and 46.

In use, as fuel 44 is highly pressurised there will be leakage 45 of high-pressure fuel from the pumping chamber through the seals into the lubricating oil supply 48. The leaked fuel will mix with and contaminate the lubricating oil, degrading the lubricating oil's ability to protect and enhance the performance of the components it is meant to cover.

In order to reduce contamination of the lubricating oil 48, the apparatus shown in Figure 7 is employed. A spiral or helical groove 50, 51 is provided in the surface of the tappet 10, the spiral groove starting at 50 on the tappet 10 at the end nearest to the pumping chamber (not shown), and ending at 51. As Figure 7 is a sectional view the portion of the spiral groove between the start 50 and the end 51 of the groove is not shown. At the end 51 of the groove, a scavenging conduit 54 is provided to channel leaked fuel from the tappet into a fuel scavenge reservoir 56. For the avoidance of doubt, although the pumping chamber is not shown it is toward the direction shown by the arrow B, and the apparatus shown in Figure 1, and referred to in Figure 6, is shown generally in Figure 7 by the arrow 52.

Leaked fuel 45 will fall under gravity in the direction opposite to arrow B, and when the fuel 45 meets the spiral groove, the leaked fuel 45 will follow the spiral groove until the end 51 of the spiral groove whereupon it is transferred into the scavenging conduit 54, and from there into the scavenge reservoir 56. This way, leaked fuel 45 will not meet the lubricating oil and contaminate the lubricating oil, and the two fluid systems are kept separate.

However, as is shown in Figure 7, in order to have an effective fuel scavenge system the tappet 10 needs to be of sufficient height so that the groove 50, 51 can be long enough to cover the circumference of the tappet 10. In addition, the pitch of the groove cannot be too narrow as otherwise scavenged fuel will only flow slowly to the scavenge conduit 54. Hence, these factors are mainly responsible for requiring the height of the tappet 10 to be taller when it is used in a fuel pump than otherwise needed.

By contrast, the present invention does not require lubrication at all as correction of the cam follower 16 only occurs when there is light or no load on the cam follower 16. Hence the present invention is much simpler and can be made more compact than the prior art.

It is to be understood that the invention is not to be limited to the specific illustrated embodiment, but only by the scope of the appended claims.

## Claims

1. A cam (24) for use in a fuel pump, the fuel pump having a pump filling phase and a pump delivery phase, wherein the cam (24) comprises a cam surface (18) provided with a portion corresponding to the pump filling phase and a portion corresponding to the pump delivery phase, the cam surface (18) further comprising a channel (18, 26, 28) suitable for guiding a cam follower (30) in contact with the cam surface (18) **characterised in that** the width (W, W_{T}, W_{B}) of the channel (18, 26, 28) is adapted to permit guidance of the cam follower (30) only for the portion of the cam surface (18) corresponding to the pump filling phase.

2. A cam (24) according to Claim 1 wherein the channel (18, 26, 28) is substantially narrower than the width of the cam.

3. A cam (24) according to Claim 1 or Claim 2 for use in a common-rail fuel pump.

4. A cam (24) according to any preceding claim wherein the width (W, W_{T}, W_{B}) of the channel (18, 26, 28) varies around the circumference of the cam (24).

5. A common-rail fuel pump suitable for use with an internal combustion engine, the said common-rail fuel pump incorporating a cam (24) according to any one of the preceding claims.

6. A common-rail fuel pump according to Claim 5 wherein the common-rail fuel pump is a radial fuel pump.

7. A method of guiding a cam follower (30) along the surface (18) of a cam (24) for use in a fuel pump, the cam surface (18) comprising a portion corresponding to a pump filling phase and a portion corresponding to a pump delivery phase, **characterised in that** guidance is provided by the cam (24) to the cam follower (30) only during the pump filling phase.

8. The method of Claim 7 wherein the channel (28) presented to the cam follower (30) varies in width around the circumference of the cam (24).

## Patentansprüche

1. Nocken (24) zur Verwendung in einer Kraftstoffpumpe, wobei die Kraftstoffpumpe eine Pumpen-Füllphase und eine Pumpen-Ausflussphase aufweist, wobei der Nocken (24) eine Nockenoberfläche (18) umfasst, die mit einem der Pumpen-Füllphase entsprechenden Abschnitt und einem der Pumpen-Ausflussphase entsprechenden Abschnitt versehen ist, wobei die Nockenoberfläche (18) ferner einen Kanal (18, 26, 28) umfasst, der geeignet ist, einen Nockenstößel (30) in Kontakt mit der Nockenoberfläche (18) zu führen,
**dadurch gekennzeichnet, dass**
die Weite (W, W_{T}, W_{B}) des Kanals (18, 26, 28) dazu ausgebildet ist, um eine Führung des Nockenstößels (30) nur für den Abschnitt der Nockenoberfläche (18) zuzulassen, welcher der Pumpen-Füllphase entspricht.

2. Nocken (24) nach Anspruch 1,
wobei der Kanal (18, 26, 28) wesentlich enger als die Weite des Nockens ist.

3. Nocken (24) nach Anspruch 1 oder Anspruch 2
zur Verwendung in einer Common-Rail-Kraftstoffpumpe.

4. Nocken (24) nach einem der vorhergehenden Ansprüche,
wobei die Weite (W, W_{T}, W_{B}) des Kanals (18, 26, 28) um den Umfang des Nockens (24) herum variiert.

5. Common-Rail-Kraftstoffpumpe, die zur Verwendung mit einem Verbrennungsmotor geeignet ist, wobei die Common-Rail-Kraftstoff pumpe einen Nocken (24) nach einem der vorhergehenden Ansprüche beinhaltet.

6. Common-Rail-Kraftstoffpumpe nach Anspruch 5, wobei die Common-Rail-Kraftstoffpumpe eine radiale Kraftstoffpumpe ist.

7. Verfahren zum Führen eines Nockenstößels (30) entlang der Oberfläche (18) eines Nockens (24) zur Verwendung in einer Kraftstoffpumpe, wobei die Nockenoberfläche (18) einen einer Pumpen-Füllphase entsprechenden Abschnitt und einen einer Pumpen-Ausflussphase entsprechenden Abschnitt umfasst,
**dadurch gekennzeichnet, dass**
eine Führung des Nockenstößels (30) durch den Nocken (24) nur während der Pumpen-Füllphase bereitgestellt wird.

8. Verfahren nach Anspruch 7, wobei der Kanal (28), der dem Nockenstößel (30) dargeboten wird, um den Umfang des Nockens (24) herum in der Weite variiert.

## Revendications

1. Came (24) destinée à être utilisée dans une pompe à carburant, la pompe à carburant présentant une phase de remplissage de pompe et une phase de refoulement de pompe, dans laquelle la came (24) comprend une surface de came (18) pourvue d'une portion correspondant à la phase de remplissage de pompe et d'une portion correspondant à la phase de refoulement de pompe, la surface de came (18) comprenant en outre un canal (18, 26, 28) approprié pour guider un suiveur de came (30) en contact avec la surface de came (18), **caractérisée en ce que** la largeur (W, W_{T}, W_{B}) du canal (18, 26, 28) est adaptée à permettre le guidage du suiveur de came (30) uniquement pour la portion de la surface de came (18) qui correspond à la phase de remplissage de pompe.

2. Came (24) selon la revendication 1, dans laquelle le canal (18, 26, 28) est sensiblement plus étroit que la largeur de la came.

3. Came (24) selon la revendication 1 ou la revendication 2, destinée à être utilisée dans une pompe à carburant "common-rail".

4. Came (24) selon l'une quelconque des revendications précédentes, dans laquelle la largeur (W, W_{T}, W_{B}) du canal (18, 26, 28) varie autour de la circonférence de la came (24).

5. Pompe à carburant "common-rail" appropriée à l'utilisation avec un moteur à combustion interne, ladite pompe à carburant "common-rail" incorporant une came (24) selon l'une quelconque des revendications précédentes.

6. Pompe à carburant "common-rail" selon la revendication 5, dans laquelle la pompe à carburant "common-rail" est une pompe à carburant radiale.

7. Procédé pour guider un suiveur de came (30) le long de la surface (18) d'une came (24) pour l'utilisation dans une pompe à carburant, la surface de came (18) comprenant une portion correspondant à une phase de remplissage de pompe et une portion correspondant à une phase de refoulement de pompe, **caractérisé en ce que** le guidage est assuré par la came (24) pour le suiveur de came (30) uniquement pendant la phase de remplissage de pompe.

8. Procédé selon la revendication 7, dans lequel le canal (28) présenté au suiveur de came (30) varie en largeur autour de la circonférence de la came (24).
